# NEUE EUROPÄISCHE PATENTSCHRIFT

(11) **EP 0 658 359 B2**
(45) Veröffentlichungstag und Bekanntmachung des Hinweises auf die Entscheidung über den Einspruch: **07.03.2007**
(45) Hinweis auf die Patenterteilung: 07.07.1999
(21) Anmeldenummer: 94119693.3
(22) Anmeldetag: 10.12.1994
(51) Int. Cl.: A62D 3/00

(54) **Katalytische Hydrodehalogenierung halogenhaltiger Verbindungen von Elementen der vierten Hauptgruppe**
Catalytic hydrodehalogenation of halogenated compounds of elements of the fourth main group.
Hydrodehalogénation catalytique de composés halogénés des éléments du quatrième groupe principal.

(30) Priorität: 17.12.1993 DE 4343169
(43) Veröffentlichungstag der Anmeldung: 21.06.1995
(73) Patentinhaber: Walter, Dr., Holger, 09619 Sayda (DE)
(72) Erfinder: Roewer, Gerhard, Prof. Dr., 09599 Freiberg (DE); Pätzold, Uwe, Dr., 8010 Graz (AT); Walter, Holger, Dr., 09619 Sayda (DE)

(56) Entgegenhaltungen:
- EP-A- 0 255 877
- DE-A- 3 311 650
- DE-A- 4 104 422
- DE-A- 051 935 895
- US-A- 2 595 620
- US-A- 3 864 281

## Beschreibung

Die Erfindung betrifft ein Verfahren zur katalytischen Hydrodehalogenierung von halogenhaltigen Verbindungen von Elementen der vierten Hauptgruppe in Anwesenheit von Wasserstoff.

Der Begriff "Hydrodehalogenierung" bedeutet im Rahmen der vorliegenden Erfindung die Anspaltung von Halogenatomen von Verbindungen der 4. Hauptgruppe. Bei Kohlenstoffverbindungen wird das Halogenatom durch Wasserstoff ersetzt, oder es bildet sich eine Doppelbindung aus. Bei höheren Homologen, z.B. Silicium, kommt es gewöhnlich zu einem Ersatz des Halogenatoms durch Wasserstoff. Brüche von Kohlenstoff-Kohlenstoffbindungen bzw. anderen Element-Element-Bindungen sind möglich. Die Hydrodehalogenierung von halogenhaltigen Verbindungen von Elementen der vierten Hauptgruppe, insbesondere Kohlenstoff und Silicium, in Anwesenheit von Wasserstoff ist eine Methode, mit welcher entsprechende halogenhaltige Verbindungen umgewandelt werden können, einerseits mit dem Ziel, entsprechende Verbindungen mit geringerem Halogengehalt zu synthetisieren, andererseits mit dem Ziel, halogenhaltige Verbindungen abzubauen oder einen weiteren chemischen oder biologischen Anbau zu erleichtern, beispielsweise im Rahmen von Angas- oder Anwasserreinigungsverfahren. Bislang verwendete Katalysatoren erwiesen sich als wenig standfest und oft auch als gefährlich zu handhaben: das die Hydrodehalogenierung katalysierende Raney-Nickel ist schwierig herzustellen und in der Handhabung gefährlich. Eine Reaktivierung des verbrauchten Katalysators ist nicht möglich.

Die US-2,595,620 offenbart ein Verfahren zur Konvertierung von SiCl₄ zu HSiCl₃ unter Beteiligung von elementarem Silicium und elementarem Kupfer. Gemäß DE-4104422 A1 wird die Konvertierungsreaktion in Gegenwart eines Kupfersalzes durchgeführt. Die deutsche Offenlegungsschrift 1935895 lehrt, die Konvertierungsreaktion in Gegenwart von siliciumhaltigen Metallen durchzuführen.

Aufgabe der vorliegenden Erfindung ist es, ein verbessertes Verfahren zur katalytischen Hydrodehalogenierung von halogenhaltigen Verbindungen von Elementen der vierten Hauptgruppe in Anwesenheit von Wasserstoff anzugeben.

Gegenstand der Erfindung ist ein Verfahren zur katalytischen Hydrodehalogenierung von halogenhaltigen Verbindungen von Elementen der vierten Hauptgruppe in Anwesenheit von Wasserstoff, bei dem ein katalytisch aktives, trägerfreies System als Katalysator eingesetzt wird, das dadurch gekennzeichnet ist, daß das katalytisch aktive System mindestens ein Übergangsmetallsilicid umfaßt, das gewonnen wird, entweder indem in feindisperser Form vorliegendes Übergangsmetallsalz mit Silicium und Wasserstoff und gegebenenfalls einer halogenhaltigen Siliciumverbindung umgesetzt wird, oder indem in feindisperser Form vorliegendes Übergangsmetall mit einer halogenhaltigen Siliciumverbindung und Wasserstoff umgesetzt wird, und das als Produkt der Umsetzung gebildete Übergangsmetallsilicid vor dem Einsatz in einen geformten Zustand gebracht wird.

Der Begriff "Element der vierten Hauptgruppe" umfaßt insbesondere Kohlenstoff und Silicium. Der Begriff "Übergangsmetall" betrifft solche Übergangsmetalle, die zur Silicidbildung befähigt sind. Insbesondere bevorzugt sind im Rahmen der vorliegenden Erfindung katalytisch aktive Systeme auf Basis von Silicium und mindestens einem Metall ausgewählt aus der Gruppe Nickel, Kupfer, Eisen, Kobalt, Molybdän, Palladium, Platin, Rhenium, Cer und Lanthan. Selbstverständlich sind auch katalytisch aktive Systeme auf Basis von Silicium verwendbar, die zwei oder mehr der genannten Übergangsmetalle umfassen.

Besonders bevorzugt ist ein Katalytisch aktives System auf Basis von Silicium und Nickel.

Das Atomverhältnis von Metall zu Silicium liegt zweckmäßig im Bereich von 100:1 bis 1:100, vorzugsweise 20:1 bis 1:20. Bei katalytisch aktiven Systemen von Nickel und Silicium sind solche Systeme mit einem Atomverhältnis von Nickel zu Silicium von 2:1 bis 3:2 besonders aktiv, ebenso besonders katalytisch aktiv sind Systeme mit einem Atomverhältnis von Nickel zu Silicium von etwa 1:1 bis 1:2. Ohne eine Erklärung für den Umstand, daß die beschriebenen Systeme katalytisch aktiv sind, abgeben zu wollen, wird angenommen, daß sich Metall-Silicid-Phasen bilden. Bei Systemen mit Nickel und Silicium sind dies z.B. Ni₂Si-, Ni₃Si₂-, NiSi- bzw. NiSi₂-Phasen. Etwaig im Überschuß vorliegendes Metall und insbesondere Silicium kann die Lebensdauer der Katalysatorsysteme erhöhen.

Auch katalytisch aktive Systeme, die als gemischte Silicide angesehen werden, wie aktive Systeme umfassend Nickel, Kupfer und Silicium, sind anwendbar. Einsetzbar sind auch Gemische der reinen Metalle und ihrer Silicide. Auch Übergangsmetallverbindungen wie Halogenide oder Carbide (z. B. NiCl₂ oder Ni₃C) können Bestandteile des katalytisch aktiven Systems sein. Das katalytisch aktive System liegt geformt vor, z. B. zu Pellets oder zu Tabletten gepreßt.

Es hat sich erwiesen, beispielsweise bei der Hydrodechlorierung von R113 zu CF₂=CFCl, daß Katalysatormassen mit überschüssigem Silicium auch bei niedrigen Temperaturen über lange Zeit stabil sind. Unter diesen Versuchsbedingungen läuft die Hydrodechlorierung von R113 vorrangig wie vorstehend angegeben ab. Die Langzeitstabilität wird z.B. bei katalytisch aktiven Systemen, die Nickel und Silicium in Form von Nickelsilicid enthalten sowie überschüssiges Silicium, beobachtet. Bei derartigen Katalysatormassen kann das Atomverhältnis von Metall (z.B. Nickel) zu Silicium kleiner als 1 sein.

Das Mol-Verhältnis von Wasserstoff und abzuspaltenden Halogenatomen kann in einem weiten Bereich schwanken. Zweckmäßig setzt man pro abzuspaltendem Halogenatom 1 bis 20 mol H₂ ein. Bezweckt man eine vollständige Hydrodehalogenierung, arbeitet man vorteilhaft im oberen Bereich, bezweckt man eine teilweise Hydrodehalogenierung, arbeitet man vorteilhafterweise im unteren Bereich.

Das Verfahren kann bei einem Druck unterhalb des Umgebungsdruckes, einem Druck oberhalb des Umgebungsdruckes oder vorzugsweise bei Umgebungsdruck (1 atm) durchgeführt werden. Vorteilhaft arbeitet man kontinuierlich in einer Durchflußapparatur.

Eine bevorzugte Ausführungsform der Erfindung betrifft den Einsatz halogenhaltiger Verbindungen des Kohlenstoffs. Diese Ausführungsform wird im folgenden erläutert.

Das erfindungsgemäße Verfahren zur Umwandlung halogenhaltiger Kohlenstoffverbindungen in Kohlenstoffverbindungen mit verringertem Halogengehalt oder, bei vollständiger Hydrodehalogenierung, in halogenfreie Kohlenstoffverbindungen kann in vielfältiger Weise angewendet werden. Beispielsweise kann man Halogenkohlenwasserstoffe bzw. Kohlenwasserstoffe synthetisieren, die als solche verwendet werden können oder Zwischenprodukte darstellen. Dies ist besonders vorteilhaft, wenn das erfindungsgemäße Verfahren im Rahmen des Recyclings des höherhalogenierten Ausgangsmaterials durchgeführt wird. Auf diese Weise kann Ausgangsmaterial, das nicht mehr weiterverwendet werden kann oder weiterverwendet werden darf, in Wertstoffe umgewandelt werden. Insbesondere kann man vollhalogenierte Kohlenstoffverbindungen in Wasserstoff und gegebenenfalls Halogen enthaltende Kohlenstoffverbindungen umwandeln, oder die gegebenenfalls eine Doppelbindung aufweisen, und auf diese Weise Ersatzstoffe für vollhalogenierte Verbindungen herstellen.

Aber auch dann, wenn das Einsatzmaterial nicht für ein Recycling vorgesehen ist, kann das erfindungsgemäße Verfahren mit Vorteil angewendet werden: die Verringerung des Halogengehalts erleichtert den Abbau des betreffenden Einsatzmaterials bei sich anschließenden anderen Umwandlungsverfahren. Beispielsweise können schlecht oder gar nicht verbrennbare höherhalogenierte oder vollhalogenierte Kohlenstoffverbindungen in leichter verbrennbare oder oxidierbare oder brennbare Kohlenstoffverbindungen mit geringerem Halogengehalt bzw. in halogenfreie Kohlenwasserstoffverbindungen umgewandelt werden.

Selbstverständlich ist das Verfahren besonders vorteilhaft bei der Anwendung auf Verbindungen, die bei der jeweiligen Reaktionstemperatur dampf- oder gasförmig vorliegen, ohne daß das Verfahren auf solche Verbindungen beschränkt sein soll. Man kann gesättigte oder ungesättigte Verbindungen einsetzen, die aus Halogen, Kohlenstoff und gegebenenfalls Wasserstoff aufgebaut sind. Verbindungen mit Heteroatomen wie Sauerstoff oder Stickstoff können ebenfalls eingesetzt werden, ebenso Verbindungen mit anderen Heteroatomen, vorausgesetzt, das katalytisch aktive System wird nicht in unakzeptabler Weise deaktiviert! Dies kann durch Handversuche überprüft werden.

Besonders gut eignet sich das Verfahren zur Anwendung auf Halogen und gegebenenfalls Wasserstoff enthaltende, gesättigte oder ungesättigte Kohlenstoffverbindungen mit 1 bis 20 C-Atomen. Besonders gut können folgende Verbindungsklassen dehydrohalogeniert werden: Chlorkohlen(wasser)stoffverbindungen, Fluorkohlen(wasser)stoffverbindungen, Chlorfluorkohlen(wasser)stoffverbindungen sowie deren bromhaltige Derivate, insbesondere mit 1 bis 20 C-Atomen, ganz besonders bevorzugt mit 1 bis 7 C-Atomen.

Die Hydrodehalogenierung, insbesondere Hydrodechlorierung und Hydrodefluorierung, führt man üblicherweise im Temperaturbereich von 100 bis 1000 °C durch. Dabei ist die optimale Tamperatur natürlich bei individuellen Verbindungen unterschiedlich und auch abhängig von Verfahrensparametern, z. B. von der Raumgeschwindigkeit bezüglich des Katalysators. Die optimale Temperatur ist auch auf den gewünschten Dehydrohalogenierungsgrad abzustimmen. Die optimale Temperatur und die optimalen Verfahrensparameter können durch Handversuche, bei denen man z. B. die Temperatur und/oder die Raumgeschwindigkeit variiert und das Reaktionsprodukt bzw. das Gemisch von Reaktionsprodukten analysiert, ermittelt werden.

Bezweckt man eine teilweise Hydrodehalogenierung, so arbeitet man im unteren Temperaturbereich. Setzt man beispielsweise Kohlenstoffverbindungen ein, die 2 oder mehr Chloratome enthalten, erzielt man eine teilweise Dehydrohalogenierung üblicherweise im Temperaturbereich von 100 bis 600 °C und eine vollständige Hydrodehalogenierung im Temperaturbereich von 200 bis 1000 °C.

Zur teilweisen Hydrodefluorierung von Kohlenstoffverbindungen, die mindestens 2 Fluoratome enthalten, arbeitet man bei einer Temperatur von 100 bis 700 °C und zur vollständigen Hydrodefluorierung bei einer Temperatur im Bereich von 300 bis 1000 °C.

Beispielsweise ergibt Kohlenstofftetrachlorid bei Reaktionstemperaturen unterhalb von 350 °C teilhydrierte Produkte, oberhalb von 350 °C entsteht Methan, d. h. es findet eine völlige Hydrodehalogenierung statt. 1,1,2-Trichlor-1,2,2-trifluorethan (R113) reagiert im erfindungsgemäßen Verfahren bei Anwendung eines katalytisch aktiven Systems, umfassend Nickel und Silicium, bereits ab 300 °C. Bei der Umsetzung im Bereich von 400 bis 450 °C entstehen mehrere Produkte, u. a. CF₂=CFCl. Ohne eine Erklärung für die Bildung dieses ungesättigten Produktes abgeben zu wollen, kann vermutet werden, daß zunächst ein Chloratom gegen Wasserstoff ausgetauscht wird und dann eine HCl-Abspaltung erfolgt. Das gebildete CF₂=CFCl ist ein wertvolles Zwischenprodukt für die chemische Synthese und für die Herstellung von Polymeren. Ab einer Temperatur von 450 °C erfolgt eine vollständige Dehydrohalogenierung des R113. Hinsichtlich der Bildung von CF₂=CFCl ist die Umsetzung besonders selektiv, wenn im katalytisch aktiven System ein Si-Überschuß vorliegt. Das katalytische System weist dann auch Langzeitstabilität auf.

Auch polymere Verbindungen können beim erfindungsgemäßen Verfahren als Ausgangsmaterial eingesetzt werden. Setzt man beispielsweise Polyvinylchlorid ein, bildet sich Salzsäure und ein Monomer. Ähnliches gilt bei Einsatz von Polytetrafluorethylen, allerdings erst bei höheren Temperaturen, ab 550 °C.

Eine andere bevorzugte Ausführungsform der Erfindung betrifft die Anwendung auf Verbindungen, welche Silicium enthalten, wobei mindestens eine Silicium-Halogen-Bindung, vorzugsweise mindestens eine Silicium-Chlor-Bindung, vorliegt. Besonders bevorzugtes Einsatzmaterial bei dieser Ausführungsform der Erfindung sind halogenhaltige Silane der Formel RₓSiCl₄₋ₓ oder halogenhaltige Disilane der Formel R_{y}Cl_{3-y}Si-SiR_{z}Cl_{3-z}, wobei R für Chlor, Alkyl mit 1 bis 6 C-Atomen oder Phenyl steht. Dabei sind x, y und z ganze Zahlen, wobei x 0 bis 3 bedeutet, y 0 bis 3 und z ebenfalls 0 bis 3 mit der Maßgabe, daß in den Silanen bzw. Disilanen mindestens ein Chlor-Atom vorhanden sein muß. Sind an einem Molekül zwei oder mehr Reste R vorhanden, so können diese die gleiche oder unterschiedliche Bedeutung besitzen. Das erfindungsgemäße Verfahren eignet sich besonders gut zur Synthese von Wasserstoff enthaltenden Silanen oder Disilanen. Insbesondere eignet es sich zur Gewinnung von SiHCl₃ aus SiCl₄. Beispielsweise kann aber auch Methyldichlorsilan aus Methyltrichlorsilan erzeugt werden.

Der Austausch von Chlor gegen Wasserstoff in Silanen bzw. Disilanen, insbesondere bei der Herstellung von SiHCl₃ erfolgt vorzugsweise im Temperaturbereich von 200 bis 1000 °C. Besonderer Vorteil dieser Ausführungsform des erfindungsgemäßen Verfahrens ist es, daß anders als bei anderen Verfahren die ursprüngliche Reinheit der Ausgangsmaterialien erhalten bleibt. Deshalb eignet sich das erfindungsgemäße Verfahren ganz besonders im Rahmen der Herstellung von Reinstsilicium unter Verwendung von Trichlorsilan (SiHCl₃). Im Rahmen dieser Herstellung von Reinstsilicium wird die letztgenannte Verbindung disproportioniert, wobei als Nebenprodukt hochreines SiCl₄ entsteht, welches nach dem erfindungsgemäßen Verfahren hydrodehalogeniert werden kann. Das gebildete HSiCl₃ kann in den Verfahrensprozeß zur Herstellung von Reinstsilicium rückgeführt werden.

Das katalytisch aktive System kann man gewünschtenfalls durch Vermischen von feindispersen Partikeln (Teilchendurchmesser < 1 mm) des betreffenden Metalls oder eines Salz des Metalls bzw. der betreffenden Metalle und Silicium erzeugen. Hierzu kann man Übergangsmetall oder ein entsprechendes Salz, eine wasserstoff- und/oder halogenhaltige Si-Verbindung, z.B. ein Siliciumhalogenid, und Wasserstoff zur Reaktion bringen. Besonders vorteilhaft ist es, feindisperses Übergangsmetall mit SiCl₄ und Wasserstoff umzusetzen. Dabei scheidet sich elementares Silicium ab, das mit dem feindispersen Übergangsmetall das katalytisch aktive System bildet. Alternativ kann man die Siliciumverbindung ganz oder teilweise durch elementares Silicium ersetzen. Das gebildete aktive System wird geformt, beispielsweise zu Tabletten gepresst.

Es wurde festgestellt, daß das katalytisch aktive System durch Umsetzung mit elementarem Silicium oder wasserstoff- und/oder halogenhaltigen Siliciumverbindungen, z.B. SiCl₄, und Wasserstoff regeneriert werden kann. Dies geschieht praktisch kontinuierlich, wenn SiHCl₃ aus SiCl₄ hergestellt wird. Auch bei der Hydrodehalogenierung von halogenhaltigen Kohlenstoffverbindungen kann kontinuierlich oder intermittierend SiCl₄ dem Ausgangsmaterial beigemischt bzw. durch das katalytisch aktive System zwecks Regenerierung durchgeleitet werden.

Ein weiterer Gegenstand der Erfindung ist ein Verfahren zur Herstellung eines feindispersen katalytisch aktiven, trägerfreien Systems auf der Basis von Silicium und mindestens einem Übergangsmetall, das dadurch gekennzeichnet ist, daß in feindisperser Form vorliegendes Übergangsmetallsalz mit Silicium und Wasserstoff und gegebenenfalls einer halogenhaltigen Siliciumverbindung zu einem Übergangsmetallsilicid als katalytisch aktivem, trägerfreien System umgesetzt wird, und das Übergangsmetallsilicid in einen geformten Zustand gebracht wird.

Ein weiterer Gegenstand der Erfindung ist ein Verfahren zur Herstellung eines feindispersen katalytisch aktiven, trägerfreien Systems auf der Basis von Silicium und mindestens einem Übergangsmetall, das dadurch gekennzeichnet ist, daß in feindisperser Form vorliegendes Übergangsmetall mit einer halogenhaltigen Siliciumverbindung und Wasserstoff zu einem Übergangsmetallsilicid als katalytisch aktivem, trägerfreien System umgesetzt wird, und das Übergangsmetallsilicid in einen geformten Zustand gebracht wird.

Die bevorzugten Übergangsmetalle sind Nickel, Kupfer, Eisen, Kobalt, Molybdän, Palladium, Platin, Rhenium, Cer und Lanthan. Ganz besonders bevorzugte Übergangsmetalle sind Nickel und Kupfer. Vorzugsweise ist das katalytisch aktive System aus Partikeln einer Größe < 1 mm aufgebaut. Es liegt geformt vor, insbesondere gepreßt zu Formlingen wie Tabletten.

Ein bevorzugtes Verfahren zur Herstellung des feindispersen katalytisch aktiven Systems ist dadurch gekennzeichnet, daß man in feindisperser Form vorliegendes Übergangsmetall oder Übergangsmetallsalz mit wasserstoff- und/oder halogenhaltigen Siliciumverbindungen, vorzugsweise Siliciumhalogenverbindungen, insbesondere SiCl₄ und einem Reduktionsmittel, insbesondere Wasserstoff, umsetzt.

Gemäß einer alternativen Ausführungsform zur Herstellung des feindispersen katalytisch aktiven Systems wird die eingesetzte Siliciumverbindung (z.B. SiCl₄) ganz oder teilweise durch elementares Silicium ersetzt.

Bevorzugte Ausführungsformen, beispielsweise hinsichtlich des Atomverhältnisses von Metall zu Silicium, entsprechen den in der Erläuterung des Anwendungsverfahrens als bevorzugt beschriebene Ausführungsformen.

Übergangsmetallsilicide wurden bislang lediglich als Hochtemperatur- und Keramik-Werkstoffe, für Cermets und Hartmetalle, als Halbleiter, als Heizleiterwerkstoff und zur Herstellung von höchstzunderfesten Schichten zur Oberflächenverdichtung verwendet. Die Verwendung als Katalysator für chemische Reaktionen, insbesondere Hydrierungsverfahren, ist neu und ebenfalls Gegenstand dieser Erfindung.

Das erfindungsgemäße Dehydrohalogenierungs-Verfahren weist den Vorteil auf, daß das katalytisch aktive System sehr standfest ist, sehr aktiv und die Herstellung beispielsweise auch hochreiner Silicium-Wasserstoff-Verbindungen gestattet. Das katalytisch aktive System, das auf einfache Weise regeneriert werden kann, wandelt die Ausgangsmaterialien, insbesondere Siliciumverbindungen, in hochreine Produkte um.

Die folgenden Beispiele sollen die Erfindung weiter erläutern, ohne sie in ihrem Umfang einzuschränken.

### Beispiel 1:

### Herstellung eines feindispersen katalytisch aktiven Systems, umfassend Silicium und Nickel

1.1. Feindisperses Nickel(2+)Chlorid und Siliciumpulver wurde mit Siliciumtetrachlorid in Gegenwart von H₂ (Molverhältnis 1:4) bei einer Temperatur von 450 °C umgesetzt. Das erhaltene katalytisch aktive System (Atomverhältnis Ni:Si = 1:1) wurde in Tablettenform gepreßt und als Hydrierungskatalysator eingesetzt.
1.2. Beispiel 1.1. wurde mit feindispersem Nickel anstelle von NiCl₂ wiederholt. Der erhaltene Katalysator konnte als Hydrierungskatalysator eingesetzt werden.

### Beispiel 2:

### Hydrierung von 1,1,2- Trichlor-1,2,2-trifluorethan (R113)

In einem Reaktor wurde eine Schüttung von 10 g des gemäß Beispiel 1.1. hergestellten katalytisch aktiven Systems erhitzt und von R113 und Wasserstoff (Molverhältnis im Bereich von 1:6 bis 1:10) durchströmt (Durchflußrate 10 Liter/h). Die Umsetzung setzte ab einer Temperatur von 300 °C in der Schüttung ein. Bei einer Temperatur von 400 bis 450 °C wurde CF₂=CFCl sowie tiefsiedende Verbindungen im Reaktionsprodukt nachgewiesen. Bei einer Temperatur oberhalb von 450 °C erfolgte vollständige Zersetzung unter Bildung von HF, HCl, SiF₄ und CH₄.

### Beispiel 3:

### Hydrierung von CCl₄

In einem Reaktor wurde eine Schüttung von 10 g des gemäß Beispiel 1.1. hergestellten katalytisch aktiven Systems mit einer Mischung von CCl₄ und Wasserstoff (Molverhältnis 1:6) umgesetzt (Durchsatz 10 l/h). Bei einer Reaktionstemperatur unterhalb von 350 °C wurden im Reaktionsprodukte auch teilhydrierte Produkte (CHCl₃, CH₂Cl₂, CH₃Cl) nachgewiesen. Bei Reaktionstemperaturen oberhalb von 350 °C wurde das CCl₄ vollständig zu Methan hydriert.

### Beispiel 4:

### Herstellung von SiHCl₃ (Trichlorsilan)

**4.1.** In einem Reaktor wurde eine Schüttung von 10 g des in Beispiel 1.1. hergestellten katalytisch aktiven Systems mit einer Mischung von SiCl₄ und Wasserstoff (Molverhältnis 1:10) bei einer Temperatur von 600 °C umgesetzt (Durchsatz 10 Liter/h). Der Umsatz betrug 16 Mol-%, dieser Wert entspricht nahezu dem thermodynamisch überhaupt möglichen. Aus dem hochreinen Ausgangsmaterial wurde ein hochreines Produkt erzeugt.
**4.2.** Beispiel 4.1. wurde wiederholt. SiCl₄ und Wasserstoff wurden im Molverhältnis 1:4 eingesetzt, wobei der Durchsatz von 6 Litern/h auf 100 l/h gesteigert wurde. Die Temperatur betrug 900°C. Der Umsatz betrug diesmal 25 Mol%, fast der thermodynamisch überhaupt mögliche Umsatz. Aus dem hochreinen Ausgangsmaterial wurde ein hochreines Produkt erzeugt.

### Beispiel 5:

### Hydrierung von Methyltrichlorsilan zu Methyldichlorsilan

In einem Reaktor wurde eine Schüttung von 10 g des gemäß Beispiel 1.1. hergestellten katalytisch aktiven Systems mit einer Mischung von CH₃SiCl₃ und Wasserstoff (Molverhältnis 1:10, Durchsatz 10 Liter/h) bei einer Temperatur oberhalb 600 °C umgesetzt. Der Umsatz bezüglich des Reaktionsproduktes Methyldichlorsilan betrug 75 Mol-%. Das hergestellte MeSiHCl₂ war von hoher Reinheit.

### Beispiele 6 bis 10:

Die Beispiele 2, 3, 4.1., 4.2. und 5 wurden unter Verwendung des in Beispiel 1.2. hergestellten Katalysatorsystems wiederholt; die Ergebnisse waren analog.

### Beispiel 11:

### Hydrodechlorierung von R113

In einem Reaktor wurde eine Schüttung von 10g des analog zu Beispiel 1.1 hergestellten katalytisch aktiven Systems (Molverhältnis Ni:Si allerdings 1:10) erhitzt und von R113 und Wasserstoff (Molverhältnis 1:10) durchströmt (10l/h). Die Umsetzung bei 400°C ergab CF₂=CFCl sowie HCl als Reaktionsprodukte. Der Siliciumüberschuß im Katalysator verbesserte die Langzeitstabilität des Katalysators.

## Patentansprüche

1. Verfahren zur katalytischen Hydrodehalogenierung von halogenhaltigen Verbindungen von Elementen der vierten Hauptgruppe in Anwesenheit von Wasserstoff, bei dem ein katalytisch aktives, trägerfreies System als Katalysator eingesetzt wird, **dadurch gekennzeichnet, daß** das katalytisch aktive System mindestens ein Übergangsmetallsilicid umfaßt, das gewonnen wird, entweder indem in feindisperser Form vorliegendes Übergangsmetallsalz mit Silicium und Wasserstoff und gegebenenfalls einer halogenhaltigen Siliciumverbindung umgesetzt wird, oder indem in feindisperser Form vorliegendes Übergangsmetall mit einer halogenhaltigen Siliciumverbindung und Wasserstoff umgesetzt wird, und das als Produkt der Umsetzung gebildete Übergangsmetallsilicid vor dem Einsatz in einen geformten Zustand gebracht wird.

2. Verfahren nach Anspruch 1, **dadurch gekennzeichnet, daß** halogenhaltige Verbindungen von Kohlenstoff oder Silicium hydrodehalogeniert werden.

3. Verfahren nach Anspruch 1 oder 2, **dadurch gekennzeichnet, daß** halogenhaltige Kohlenstoffverbindungen mit 1 bis 20 C-Atomen hydrodehalogeniert werden.

4. Verfahren nach Anspruch 3, **dadurch gekennzeichnet, daß** Chlorkohlenstoffverbindungen, Chlorkohlenwasserstoffverbindungen, Fluorkohlenstoffverbindungen, Fluorkohlenwasserstoffverbindungen, Chlorfluorkohlenstoffverbindungen, Chlorfluorkohlenwasserstoffverbindungen oder deren bromhaltige Derivate hydrodehalogeniert werden.

5. Verfahren nach einem der Ansprüche 1 bis 4, **dadurch gekennzeichnet, daß** Chlor enthaltende Kohtenstoffverbindungen bei einer Temperatur im Bereich von 100 bis 1000 °C hydrodehalogeniert werden.

6. Verfahren nach Anspruch 5, **dadurch gekennzeichnet, daß** mindestens zwei Chloratome enthaltende Kohlenstoffverbindungen hydrodechloriert werden und eine teilweise Hydrodechlorierung bei einer Temperatur im Bereich von 100 bis 600 °C und/oder eine vollständige Hydrodechlorierung bei einer Temperatur im Bereich von 200 bis 1000 °C durchgeführt wird.

7. Verfahren nach einem der Ansprüche 1 bis 4, **dadurch gekennzeichnet, daß** daß Fluor enthaltende Kohlenstoffverbindungen bei einer Temperatur im Bereich von 100 bis 1000 °C hydrodehalogeniert werden.

8. Verfahren nach Anspruch 7, **dadurch gekennzeichnet, daß** mindestens zwei Fluoratome enthaltende Kohlenstoffverbindungen hydrodefluoriert werden und eine teilweise Hydrodefluorierung bei einer Temperatur im Bereich von 100 bis 700 °C und/oder eine vollständige Hydrodefluorierung bei einer Temperatur im Bereich von 300 bis 1000 °C durchgeführt wird.

9. Verfahren nach einem der Ansprüche 1 oder 2, **dadurch gekennzeichnet, daß** halogenhaltige Silane der Formel RₓSiCl₄₋ₓ oder halogenhaltige Disilane der Formel R_{y}Cl_{3-y}Si-SiR_{z}Cl_{3-z} mit R=Cl, Alkyl mit 1 bis 6 C-Atomen, Phenyl hydrodehalogeniert werden, wobei x, y und z unabhängig voneinander 0, 1, 2 oder 3 bedeuten mit der Maßgabe, daß die Disilane mindestens 1 Chloratom aufweisen.

10. Verfahren nach Anspruch 9, **dadurch gekennzeichnet, daß** SiCl₄ zu SiHCl₃ hydrodehalogeniert wird.

11. Verfahren nach einem der Ansprüche 1, 2, 9 oder 10, **dadurch gekennzeichnet, daß** die Hydrodehalogenierung halogenhaltiger Silane im Rahmen der Herstellung von Reinstsilicium unter Verwendung von SiHCl₃ durchgeführt wird.

12. Verfahren nach einem der Ansprüche 1 bis 11, **dadurch gekennzeichnet, daß** die Hydrodehalogenierung von Verbindungen mit Kohlenstoff-Halogen-Bindungen unter intermittierender oder kontinuierlicher Zugabe von elementarem Silicium und/oder wasserstoff- und/oder halogenhaltigen Siliciumverbindungen durchgeführt wird.

13. Verfahren nach einem der Ansprüche 1 bis 12, **dadurch gekennzeichnet, daß** pro abzuspaltendem Halogenatom 1 bis 20 Mol H₂ eingesetzt werden.

14. Verfahren nach einem der Ansprüche 1 bis 13, **dadurch gekennzeichnet, daß** drucklos hydrodehalogeniert wird.

15. Verfahren nach einem der Ansprüche 1 bis 14, **dadurch gekennzeichnet, daß** ein katalytisch aktives, trägerfreies System auf Basis von Silicium und mindestens einem Metall eingesetzt wird, und das Metall ausgewählt ist aus der Gruppe umfassend Nickel, Kupfer, Eisen, Kobalt, Molybdän, Palladium, Platin, Rhenium, Cer und Lanthan.

16. Verfahren zur Herstellung eines feindispersen katalytisch aktiven, trägerfreien Systems auf der Basis von Silicium und mindestens einem Übergangsmetall, **dadurch gekennzeichnet, daß** in feindisperser Form vorliegendes Übergangsmetallsalz mit Silicium und Wasserstoff und gegebenenfalls einer halogenhaltigen Siliciumverbindung zu einem Übergangsmetallsilicid als katalytisch aktivem, trägerfreien System umgesetzt wird, und das Übergangsmetallsilicid in einen geformten Zustand gebracht wird.

17. Verfahren zur Herstellung eines feindispersen katalytisch aktiven, trägerfreien Systems auf der Basis von Silicium und mindestens einem Übergangsmetall, **dadurch gekennzeichnet, daß** in feindisperser Form vorliegendes Übergangsmetall mit einer halogenhaltigen Siliciumverbindung und Wasserstoff zu einem Übergangsmetallsilicid als katalytisch aktivem, trägerfreien System umgesetzt wird, und das Übergangsmetallsilicid in einen geformten Zustand gebracht wird.

18. Verfahren nach Anspruch 16 oder 17, **dadurch gekennzeichnet, daß** als halogenhaltige Siliciumverbindung SiCl₄ umgesetzt wird.

## Claims

1. Process for the catalytic hydrohalogenation of halogen-containing compounds of elements of main group IV in the presence of hydrogen, in which a catalytically active carrier-free system is used as a catalyst, **characterized in that** the catalytically active system comprises at least one transition metal silicide which is obtained either in such a way that a transition metal salt present in a finely divided form is converted with silicon and hydrogen and optionally a halogen-containing silicon compound or in such a way that a transition metal present in a finely divided form is converted with a halogen-containing silicon compound and hydrogen and the transition metal silicide formed as a product of the conversion is brought into a formed state prior to use.

2. Process according to Claim 1, **characterized in that** halogen-containing compounds of carbon or silicon are hydrodehalogenated.

3. Process according to Claim 1 or 2, **characterized in that** halogen-containing carbon compounds having from 1 to 20 carbon atoms are hydrodehalogenated.

4. Process according to Claim 3, **characterized in that** chlorocarbon compounds, chlorohydrocarbon compounds, fluorocarbon compounds, fluorohydrocarbon compounds, chlorofluorocarbon compounds, chlorofluorohydrocarbon compounds or their bromine-containing derivatives are hydrodehalogenated.

5. Process according to any of Claims 1 to 4, **characterized in that** chlorine-containing carbon compounds are hydrodehalogenated at a temperature in the range from 100 to 1000°C.

6. Process according to Claim 5, **characterized in that** carbon compounds containing at least two chlorine atoms are hydrodechlorinated and a partial hydrodechlorination at a temperature in the range from 100 to 600°C and/or a complete hydrodechlorination at a temperature in the range from 200 to 1000°C are/is carried out.

7. Process according to any of Claims 1 to 4, **characterized in that** fluorine-containing carbon compounds are hydrodehalogenated at a temperature in the range from 100 to 1000°C.

8. Process according to Claim 7, **characterized in that** carbon compounds containing at least two fluorine atoms are hydrodefluorinated and a partial hydrodefluorination at a temperature in the range from 100 to 700°C and/or a complete hydrodefluorination at a temperature in the range from 300 to 1000°C are/is carried out.

9. Process according to either Claim 1 or 2, **characterized in that** halogen-containing silanes of the formula RₓSiCl₄₋ₓ or halogen-containing disilanes of the formula R_{y}Cl_{3-y}Si-SiR_{z}Cl_{3-z} where R=Cl, alkyl having from 1 to 6 carbon atoms or phenyl, where x, y and z are, independently of one another, 0, 1, 2 or 3 with the proviso that the disilanes contain at least one chlorine atom, are hydrodehalogenated.

10. Process according to Claim 9, **characterized in that** SiCl₄ is hydrodehalogenated to form SiHCl₃.

11. Process according to any of Claims 1, 2, 9 and 10, **characterized in that** the hydrodehalogenation of halogen-containing silanes is carried out in the context of the production of very pure silicon using SiHCl₃.

12. Process according to one of the claims 1 to 11, **characterized in that** the hydrohalogenation of compounds with carbon-halogen bonds is carried out under intermittent or continuous addition of elementary silicon and/or hydrogen- and/or halogen-containing silicon compounds.

13. Process according to one of the claims 1 to 12, **characterized in that that** 1 to 20 mol of H₂ are used per halogen atom to be split off.

14. Process according to one of the claims 1 to 13, **characterized in that** the hydrohalogenation is carried out in a pressureless manner.

15. Process according to one of the claims 1 to 14, **characterized in that** a catalytically active, carrier-free system on the basis of silicon and at least one metal is used and the metal is selected from the group comprising nickel, copper, iron, cobalt, molybdenum, palladium, platinum, rhenium, cerium and lanthanum.

16. Process for producing a finely divided, catalytically active, carrier-free system based on silicon and at least one transition metal, **characterized in that** when present in a finely divided form it converts transition metal salt with silicon and hydrogen and optionally a halogen-containing silicon compound into a transition metal silicide as a catalytically active system and the transition metal silicide is brought into a formed state.

17. Process for producing a finely divided, catalytically active, carrier-free system on the basis of silicon and at least one transition metal, **characterized in that** a transition metal present in finely divided form is converted with a halogen-containing silicon compound and hydrogen into a transition metal silicide as a catalytically active carrier-free system and the transition metal silicide is brought into a formed state.

18. Process according to claim 16 or 17, **characterized in that** SiCl₄ is converted as a halogen-containing silicon compound.

## Revendications

1. Procédé d'hydrodéshalogénation catalytique de composés halogénés d'éléments du quatrième groupe en présence d'hydrogène, un système catalytiquement actif sans support étant mis en oeuvre comme catalyseur, **caractérisé en ce que** le système catalytiquement actif comprend au moins un siliciure de métal de transition, qui est obtenu soit en transformant un sel métallique de transition finement dispersé par mise en réaction avec du silicium et de l'hydrogène et selon le cas avec un composé de silicium halogéné, soit en transformant un métal de transition finement dispersé par mise en réaction avec un composé de silicium halogéné et l'hydrogène et **en ce que** le siliciure de métal de transition préparé comme produit de la transformation est amené à un état moulé avant usage.

2. Procédé suivant la revendication 1, **caractérisé en ce que** des composés halogénés de carbone ou de silicium sont hydrodéshalogénés.

3. Procédé suivant la revendication 1 ou 2, **caractérisé en ce que** des composés halogénés de carbone avec 1 à 20 atomes de carbone sont hydrodéshalogénés.

4. Procédé suivant la revendication 3, **caractérisé en ce que** des composés chlorocarbonés, des composés chlorohydrocarbonés, des composés fluorocarbonés, des composés fluorohydrocarbonés, des composés chlorofluorocarbonés, des composés chlorofluorohydrocarbonés ou leurs dérivés bromés sont hydrodéshalogénés.

5. Procédé suivant l'une des revendications 1 à 4, **caractérisé en ce que** des composés chlorés de carbone sont hydrodéshalogénés à une température dans l'intervalle de 100 à 1000°C.

6. Procédé suivant la revendication 5, **caractérisé en ce que** des composés de carbone contenant au moins deux atomes de chlore sont hydrodéchlorés, et **en ce qu'**on réalise une hydrodéchloration partielle à une température dans l'intervalle de 100 à 600°C et/ou une hydrodéchloration complète à une température dans l'intervalle de 200 à 1000°C.

7. Procédé suivant l'une des revendications 1 à 4, **caractérisé en ce que** des composés fluorés de carbone sont hydrodéshalogénés à une température dans l'intervalle de 100 à 1000°C.

8. Procédé suivant la revendication 7, **caractérisé en ce que** des composés de carbone contenant au moins deux atomes de fluor sont hydrodéfluorés, et **en ce qu'**on réalise une hydrodéfluoration partielle à une température dans l'intervalle de 100 à 700°C et/ou une hydrodéfluoration complète à une température dans l'intervalle de 300 à 1000°C.

9. Procédé suivant l'une des revendications 1 ou 2, **caractérisé en ce que** des silanes halogénés de formule RₓSiCl₄₋ₓ ou des disilanes halogénés de formule R_{y}Cl_{3-y}Si-SiR_{z}Cl_{3-z}, avec R=Cl, alkyle avec 1 à 6 atomes de carbone, phényle, sont hydrodéshalogénés, x, y et z indépendamment l'un de l'autre signifiant 0, 1, 2 ou 3, étant entendu que les disilanes présentent au moins 1 atome de chlore.

10. Procédé suivant la revendication 9, **caractérisé en ce que** SiCl₄ est hydrodéshalogéné en SiHCl₃.

11. Procédé suivant l'une des revendications 1, 2, 9 ou 10, **caractérisé en ce que** l'hydrodéshalogénation de silanes halogénés est réalisée dans le cadre de la préparation de silicium très pur en utilisant du SiHCl₃.

12. Procédé selon l'une des revendications 1 à 11, **caractérisé en ce que** l'hydrodéshalogénation de composés avec des liaisons carbone-halogène est réalisée par addition intermittente ou continue de silicium élémentaire et/ou de composés hydrogénés et/ou halogénés de silicium.

13. Procédé selon l'une des revendications 1 à 12, **caractérisé en ce qu'**on utilise, par atome d'halogène à séparer, 1 à 20 moles de H₂.

14. Procédé selon l'une des revendications 1 à 13, **caractérisé en ce qu'**on hydrodéshalogène sans pression.

15. Procédé selon l'une des revendications 1 à 14, **caractérisé en ce qu'**on utilise un système catalytiquement actif sans support à base de silicium et d'au moins un métal et **en ce que** le métal est choisi dans le groupe comprenant le nickel, le cuivre, le fer, le cobalt, le molybdène, le palladium, le platine, le rhénium, le cérium et le lanthane.

16. Procédé pour la préparation d'un système finement dispersé catalytiquement actif sans support à base de silicium et d'au moins un métal de transition **caractérisé en ce que** le sel de métal de transition finement dispersé est transformé par réaction avec le silicium et l'hydrogène et selon le cas avec un composé halogéné de silicium, en un siliciure de métal de transition en tant que système catalytiquement actif sans support et le siliciure de métal de transition est amené à un état moulé.

17. Procédé pour la préparation d'un système finement dispersé catalytiquement actif sans support à base de silicium et d'au moins un métal de transition **caractérisé en ce que** le sel de métal de transition finement dispersé est transformé par mise en réaction avec un composé halogéné de silicium et l'hydrogène, en un siliciure de métal de transition en tant que système catalytiquement actif sans support et le siliciure de métal de transition est amené à un état moulé.

18. Procédé selon la revendication 16 ou 17, **caractérisé en ce qu'**on transforme du SiCl₄ en tant que composé de silicium halogéné.
